# EUROPÄISCHE PATENTSCHRIFT

(11) **EP 2 198 175 B1**
(45) Veröffentlichungstag und Bekanntmachung des Hinweises auf die Patenterteilung: **10.08.2016**
(21) Anmeldenummer: 08804145.4
(22) Anmeldetag: 12.09.2008
(51) Int. Cl.: F16C 35/077, F16C 27/06

(54) **WÄLZLAGER, WÄLZLAGERANORDNUNG UND MASCHINE, INSBESONDERE ELEKTRISCHES HAUSGERÄT**
ROLLER BEARING ROLLER BEARING ARRANGEMENT AND MACHINE IN PARTICULAR AN ELECTRICAL DOMESTIC APPLIANCE
ROULEMENT, ENSEMBLE PALIER À ROULEMENT ET MACHINE, EN PARTICULIER APPAREIL MÉNAGER ÉLECTRIQUE

(30) Priorität: 05.10.2007 DE 102007047644
(43) Veröffentlichungstag der Anmeldung: 23.06.2010
(73) Patentinhaber: BSH Hausgeräte GmbH, 81739 München (DE)
(72) Erfinder: PECAT, Herbert, 97633 Saal / Waltershausen (DE)
(86) Internationale Anmeldenummer: PCT/EP2008/062182
(87) Internationale Veröffentlichungsnummer: WO 2009/047080

(56) Entgegenhaltungen:
- DE-A1- 10 325 522
- DE-U- 7 122 114
- FR-A- 1 086 999
- US-A- 5 961 222
- US-A1- 2005 265 645
- US-B1- 6 488 412

## Beschreibung

### Hintergrund der Erfindung

Die Erfindung betrifft ein Wälzlager mit einem Außenring und einem koaxial zum Außenring angeordneten Innenring, welche zueinander durch Wälzkörper beabstandet sind, sowie eine derartige Wälzlager aufweisende Wälzlageranördnung für eine vorzugsweise elektrische Maschine, insbesondere ein elektrisches Hausgerät, mit einem sich am Gehäuse der elektrischen Maschine abstützenden Außenring und einem einen Rotor umfassenden, koaxial zum Außenring angeordneten Innenring, welche zueinander durch Wälzkörper beabstandet sind. Die Erfindung betrifft weiterhin eine damit ausgestattete Maschine, insbesondere ein elektrisches Hausgerät.

### Stand der Technik

Ein Wälzlager, eine Wälzlageranordnung und eine elektrische Maschine der eingangs genannten Art sind aus den Figuren der Offenlegungsschrift DE 197 17 594 A1 bekannt.

In einen topfartig ausgeformten Dom des aus Blech gefertigten Gehäuses der elektrischen Maschine ist der Außenring eines Kugellagers drehfest eingelassen, welcher sich über seine Radialfläche unmittelbar am Gehäusedom abstützt. Der zum Außenring koaxial ausgerichtete Innenring des Kugellagers nimmt einen wellenartigen Fortsatz des Rotors drehfest auf. Zwischen Außenring und Innenring sind Wälzkörper in Form von Kugeln angeordnet, welche einerseits Außen- und Innenring zueinander ausrichten und andererseits eine reibarme Relativbewegung zwischen beiden Ringen ermöglichen.

Aus der Praxis ist bekannt, den Außenring gegenüber dem Gehäuse axial durch Federelemente, insbesondere metallische Teller-, Kegel- oder Schraubenfedern, vorzuspannen. Diese Federelemente erlauben einen Ausgleich von axialen Toleranzen oder Wärmedehnungen, sind jedoch bei der Montage der Wälziageranordnung als gesonderte Bauteile einzufügen. Aus der Praxis ist ferner bekannt, Wälzlager mit Deck- und Dichtscheiben auszustatten oder deren Mantelflächen mit Nuten zu versehen.

Ein radialer Toleranzausgleich wird beispielsweise durch Einbetten des Außenrings in eine elastische Dichtmasse, beispielsweise aus Polyurethan, herbeigeführt. Dabei kann ein metallischer Kontakt und damit eine Übertragung von Vibrationen zwischen Außenring und Gehäusedom nicht immer sicher vermieden werden. Darüber hinaus ist das Einbringen der Dichtmassen fertigungstechnisch ungünstig.

Die Patentschrift FR 1086999 A offenbart eine ringförmige Kautschukmuffe, die zur Vibrationsdämpfung den Außenring eines Kugellagers umgibt und in manchen Ausführungen auch die Stirnflächen des Kugellagers bedeckt. In letzterem Fall ist der Querschnitt der Muffe im Wesentlichen U-förmig. Auch die Patentschrift US 5,961,222 offenbart ein Wälzlager, bei dem die Umfangsfläche des Außenrings mit einem Elastomer belegt ist, hier jedoch zu Zwecken des Korrosionsschutzes. Aus der Patentschrift US 6,488,412 ist ein elastisches Element bekannt, das sich in Verlängerung des Innenrings eines Wälzlagers erstreckt und in einer Lagerbuchse eine Feder ersetzt.

Das Gebrauchsmuster DE 7122114 U offenbart ein Wälzlager, dessen Innen- und Außenring auf ihren Umlaufflächen jeweils mit umlaufenden Nuten versehen sind, in denen zu Dämpfungszwecken Gummiringe eingelegt sind. Auch aus der Offenlegungsschrift DE 10325522 ist ein Wälzlager bekannt, in dessen Außenring umlaufende Nuten eingearbeitet sind, in denen Kunststoffringe als Dämpfungselemente sitzen. Außerdem sei auf die Offenlegungsschrift US 2005/0265645 hingewiesen.

### Der Erfindung zugrundeliegende Aufgabe

Der Erfindung liegt die Aufgabe zugrunde, die vorbekannten Wälzlager, Wälzlageranordnungen und Maschinen hinsichtlich Montage und Funktion weiter zu verbessern.

### Erfindungsgemäße Lösung

Die Lösung der Aufgabe gelingt durch ein Wälzlager mit einem Außenring und einem koaxial zum Außenring angeordneten Innenring, welche zueinander durch Wälzkörper beabstandet sind. An seinen Außenflächen ist das Wälzlager mit mindestens einem elastischen Kompensationselement in Form eines elastischen Puffers ausgestattet, wobei mindestens eine Stirnfläche des Wälzlagers mit einem elastischen Puffer versehen ist. Der Puffer erstreckt sich einerseits über eine die Wälzkörper stirnseitig überdeckende Deck- oder Dichtscheibe sowie andererseits kragenartig in Verlängerung des Außenrings, wobei der elastische Puffer ausschließlich an der mindestens einen Stirnfläche des Wälzlagers angeordnet ist. Das Wälzlager kann dabei beliebiger Bauart sein, also beispielsweise als Kugellager, Zylinderrollenlager oder Kegelrollenlager ausgebildet sein.

Durch diese Ausbildung kann der Einsatz gesonderter Bauteile oder von Dicht- und Ausgleichsmassen vermieden werden. Dies kann die Montage der Wälzlager erleichtern und zu einer zuverlässigen akustischen Entkoppelung führen. Darüber hinaus kann der axiale Raumbedarf für die Lagerung des Rotors verringert werden.

Dadurch, dass mindestens eine Stirnfläche des Wälzlagers mit einem elastischen Puffer versehen ist, ist ein zuverlässiger axialer Toleranz- und Dehnungsausgleich ohne Verwendung der aus dem Stand der Technik bekannten gesonderten Teller-, Kegel- oder Schraubenfedern möglich. Ferner kann die axiale Bautiefe gegenüber dem Stand der Technik erheblich reduziert werden.

Hinsichtlich einer Maschine wird die Aufgabe dadurch gelöst, dass das Wälzlager über an seinen Außenflächen vorgesehene Kompensationselemente am Gehäuse der Maschine abstützbar ist

Neben den zuvor hinsichtlich des erfindungsgemäßen Wälzlagers genannten Vorteilen ermöglicht eine derartige Wälzlageranordnung die Verwendung günstiger Werkstoffe bei der Fertigung des Gehäuses, da die Ziehtiefe des das Wälzlager aufnehmenden Gehäusedoms verringert wird und damit geringere Anforderungen an die Tiefziehfähigkeit des Gehäusewerkstoffs gestellt werden. Die betreffende Maschine weist ferner ein besonders gutes akustisches Verhalten und eine lange Standzeit auf.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Mit Vorteil ist der elastische Puffer ringförmig oder insbesondere noppenartig ausgebildet. Die Anpresskräfte können dabei durch die Härte des Werkstoffs des elastischen Puffers sowie durch seine Geometrie beeinflußt werden, wobei eine mit Noppen versehene Ausführung hinsichtlich ihrer Geometrie einen besonders hohen Freiheitsgrad aufweisen kann.

Nach einer besonders bevorzugten Ausbildung der Erfindung ist der elastische Puffer mit einer die Wälzkörper stirnseitig überdeckenden Deck- oder Dichtscheibe stoff- und/oder formschlüssig verbunden, wobei sich der Puffer von der Deck- und Dichtscheibe weg zu seinen Funktionsbereichen erstreckt. Diese Verbindung erfolgt vorzugsweise durch Spitzgießen eines elastischen Werkstoffs, beispielsweise eines thermoplastischen Elastomers (z. B. TPE-O, TPE-S, TPE-U), an die Deck- oder Dichtscheibe des Wälzlagers. Falls die Deck- oder Dichtscheibe ihrerseits aus einem Werkstoff mit ausreichenden elastischen Eigenschaften besteht, kann der elastische Puffer mit besonderem Vorteil sogar einstückig mit der Deck- oder Dichtscheibe ausgebildet werden. Hierdurch wird, von einer unbedeutenden Erhöhung des Werkstoffeinsatzes abgesehen, kein zusätzlicher Fertigungs- oder Werkzeugaufwand erforderlich.

Eine andere vorteilhafte Ausgestaltung der Erfindung besteht darin, dass die äußere Mantelfläche des Außenrings und/oder die innere Mantelfläche des Innenrings mit radial spannbaren Federelementen ausgestattet sind. Das aus dem Stand der Technik bekannte Einbetten des Wälzlagers in eine Dicht- oder Ausgleichsmasse kann dadurch vermieden werden, wodurch die Montage des Wälzlagers erheblich vereinfacht wird. Darüber hinaus kann Störungen der Montagelinie durch Verkleben von Kugellagern und dergleichen entgegengewirkt und die Anlagenverfügbarkeit somit erhöht werden. Ferner ist die akustische Trennung zwischen Wälzlager und Gehäuse der Maschine zuverlässig reproduzierbar.

Die radial wirkenden elastischen Federelemente werden mit Vorteil aus einem elastomeren Werkstoff gefertigt. Vernetzende oder thermoplastische Elastomere hierzu sind in verschiedenen Härten, geeignetem Rückstellvermögen und mit unterschiedlicher chemischer Beständigkeit handelsüblich, preisgünstig und leicht zu verarbeiten.

Die radial wirkenden Federelemente sind vorzugsweise ringförmig ausgebildet und koaxial zum Außen- bzw. Innenring ausgerichtet. Durch diese Ausbildung kann eine besonders gleichmäßige und schwingungstechnisch günstige Druckverteilung auf dem Lagerumfang erzielt werden. Insbesondere kann eine ungewollte exzentrische Anordnung des Wälzlagers verhindert werden.

Grundsätzlich können die Federelemente sehr unterschiedliche Querschnitte aufweisen und auch als Schlauchringe oder geschäumte Ringe ausgebildet sein. In großer Vielfalt verfügbar sind jedoch vorgefertigte Federelemente in Form kompakter Ringe mit kreisförmigem Querschnitt, welche in der Technik in unterschiedlicher Weise eingesetzt werden (O-Ringe).

Durch eine gezielte Auswahl eines O-Rings mit speziellen mechanischen oder chemischen Eigenschaften können insbesondere bei Kleinserien eine individuelle Anpassung der Kompensationsmittel an den Einsatzzweck sowie die gewünschte Passung (Spiel- oder Presspassung) oder auch eine nachträgliche Korrektur durch einen Austausch erfolgen.

Vorteilhaft ist auch das Ein- oder Anspritzen eines zu einem elastischen Federelement aushärtenden Werkstoffs, beispielsweise eines thermoplastischen Elastomers (z. B. TPE-O, TPE-S, TPE-U). Insbesondere bei umfangreicher Fertigung gleichartiger Wälzlager können hierdurch günstige Fertigungskosten erzielt werden.

Nach einer besonders bevorzugten Ausführung der Erfindung sind die ringartigen Federelemente in umlaufende Radialnuten im Außen- bzw. Innenring eingefügt, wobei sie mit Vorteil über 50% bis 90%, insbesondere etwa 75% ihrer radialen Erstreckung in die Radialnuten eingelassen sind. Durch diese Ausbildung können die Federelemente bei Montage des Wälzlagers sowie dem späteren Betrieb der Maschine ausreichend gegen ein ungewolltes axiales Verschieben gesichert werden.

Besonders vorteilhaft ist eine Ausbildung, bei welcher an Außen- bzw. Innenring zueinander axial beabstandet mindestens zwei derartige Federelemente vorgesehen sind. Hierdurch wird auch in axialer Richtung des Wälzlagers eine besonders günstige Druckverteilung erzielt. Alternativ kann vorgesehen werden, die radial spannbaren Federelemente noppenartig auszubilden und auf der Mantelfläche des Außenrings und/oder Innenrings rasterartig verteilt anzuordnen. In diesem Fall werden die Federelemente vorzugsweise in bohrungsartige Ausnehmungen im Außenring und/oder Innenring eingespritzt oder unmittelbar an dessen Mantelfläche angespritzt.

Bei einer mit solchen Wälzlagern ausgestatteten Wälzlageranordnung für eine vorzugsweise elektrische Maschine ist der Außenring mit Vorteil gegen das Gehäuse an mindestens einer Stirnfläche über wenigstens einen elastischen Puffer abgestützt. Infolge der gegenüber dem Stand der Technik verringerten Bautiefe können zur Aufnahme des Wälzlagers vorgesehene Dome am Gehäuse weniger tief ausgeformt werden. Bei einer Gehäusefertigung durch Tiefziehen eines Halbzeugs werden daher geringere Anforderungen an die Streckbarkeit des Gehäusewerkstoffs gestellt.

Nach einer weiteren bevorzugten Ausführungsform stützt sich der Außenring des Wälzlagers gegen das Gehäuse über mindestens ein radial spannbares, an der Mantelfläche des Wälzlagers vorgesehenes Federelement ab, wodurch Montageaufwand, Schwingungsverhalten und Standfestigkeit der so ausgestatteten Maschine erheblich verbessert werden können.

### Kurzbeschreibung der Zeichnungen

Die Erfindung wird im Folgenden anhand schematischer Zeichnungen an drei Ausführungsbeispielen mit weiteren Einzelheiten näher erläutert.

Es zeigen:
- Fig. 1:: eine perspektivische Ansicht eines erfindungsgemäßen Wälzlagers;
- Fig. 2:: einen Schnitt durch das Wälzlager nach Figur 1;
- Fig. 3:: einen Schnitt durch eine Wälzlageranordnung für ein elektrisches Hausgerät unter Verwendung des Wälzlagers nach Fig. 1 und 2;
- Fig. 4:: eine perspektivische Ansicht eines Wälzlagers nach einer anderen Ausführung der Erfindung.
- Fig. 5: eine weitere perspektivische Ansicht eines erfindungsgemäßen Wälzlagers.

### Ausführliche Beschreibung anhand von drei Ausführungsbeispielen

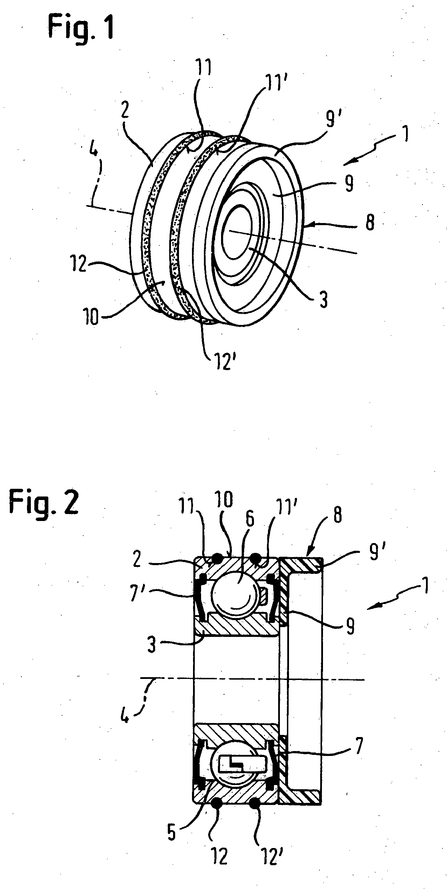

Das in Figur 1 und 2 gezeigte Wälzlager 1 besteht aus einem Außenring 2 und einem Innenring 3, die zueinander sowie in Bezug auf die Drehachse 4 des zu lagernden Bauteils koaxial angeordnet sind. Zwischen Außenring 2 und Innenring 3 sind, zueinander in Umfangsrichtung durch einen Lagerkäfig 5 auf Abstand gehalten, kugelförmige Wälzkörper 6 vorgesehen.

Die Wälzkörper 6 sind stirnseitig durch Deck- oder Dichtscheiben 7, 7' abgedeckt, welche drehfest mit dem Außenring 2 verbunden sind und beispielsweise dem Rückhalt einer Fettfüllung oder der Vermeidung von Verschmutzung des Wälzlagers 1 dienen. An eine Deck- oder Dichtscheibe 7 ist ein Kompensationselement in Form eines elastischen Puffers 8 angeformt, welcher ringförmig ausgebildet ist und sich einerseits über die Deck- oder Dichtscheibe 7 sowie andererseits kragenartig in Verlängerung des Außenrings 2 erstreckt. Der Querschnitt des Puffers 8 ist somit winkelartig mit zueinander rechtwinklig stehenden Schenkeln 9, 9' ausgebildet, wobei der die Deck- oder Dichtscheibe überdeckende Schenkel 9 zur Verringerung des Werkstoffeinsatzes etwa um die Hälfte dünner ausgeführt ist als der vom Wälzlager abragende Schenkel 9'. Die elastischen Eigenschaften des elastischen Puffers 8 können durch die Härte des verwendeten Werkstoffs und die radiale wie axiale Ausdehnung des Schenkels 9' an die Einsatzbedingungen des Wälzlagers 1 angepaßt werden.

Die Mantelfläche 10 des Außenrings 2 ist ferner mit zwei zueinander in axialer Richtung beabstandeten, umlaufenden Radialnuten 11, 11' versehen, in welche Kompensationselemente in Form radial spannbarer Federelemente 12, 12' eingefügt sind. Die Federelemente 12, 12' sind ringförmig ausgebildet und weisen einen kompakten Kreisquerschnitt auf.

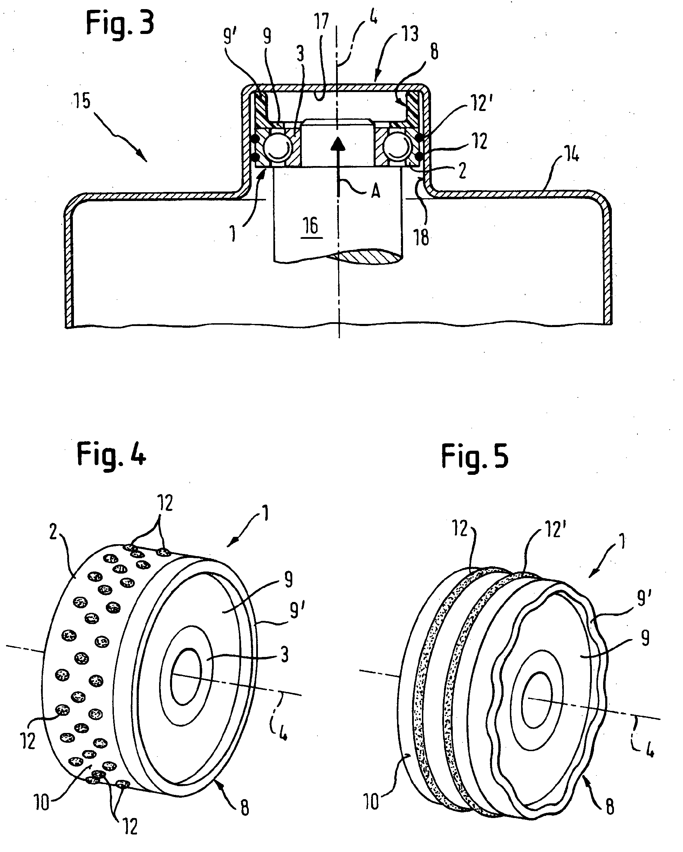

Wie aus der Wälzlageranordnung nach Figur 3 ersichtlich, stützt sich der Außenring 2 des erfindungsgemäßen Wälzlagers 1 über den elastischen Puffer 8 axial und über die ringförmigen Federelemente 12, 12' radial an einem topfartigen Dom 13 des Gehäuses 14 eines elektrischen Hausgeräts 15 ab. Der Innenring 3 nimmt einen Rotor 16 auf, welcher in axialer Richtung (Pfeil A) gegen den Innenring 3 preßt. Diese Pressung ist vom Betriebszustand, insbesondere der Betriebstemperatur des Hausgeräts, sowie den Fertigungstoleranzen abhängig und wird durch elastische Verformung des an der inneren Stirnfläche 17 des Doms 13 anliegenden Puffers 8 kompensiert.

Der Ausgleich in radialer Richtung erfolgt über die ringförmigen Federelemente 12, 12', welche gegen die innere Umfangsfläche 18 des Doms 13 gespannt sind. Dabei kann die Ziehtiefe des Doms 13 gegenüber dem Stand der Technik verringert werden.

Alle erfindungsgemäß vorgesehenen Kompensationsmittel, also der Puffer 8 wie auch die radial spannbaren Federelemente 12, 12', sind ferner an der akustischen Entkoppelung zwischen Rotor 16 und Gehäuse 14 beteiligt.

Bei dem Wälzlager nach Figur 4 bestehen die radial spannbaren Federelemente 12 aus einer Vielzahl von Noppen, die radial nach außen aus dem Außenring 2 herausragen und über dessen Mantelfläche 10 rasterartig verteilt sind. Diese Ausbildung ermöglicht es grundsätzlich, jeden Noppen oder bestimmte Gruppen von Noppen mit individuellen Eigenschaften auszustatten und damit die elastischen Eigenschaften unterschiedlicher Noppenwerkstoffe gezielt zu kombinieren, auch mit Blick auf die gewünschte Passung zwischen Außenring 2 des Wälzlagers 1 und dem Gehäuse 14.

Das Wälzlager nach Figur 5 ist mit einem elastischen Puffer 8 ausgestattet, der anstelle eines gleichförmig umlaufenden Rings ebenfalls noppenartig ausgeführt ist. Diese Ausbildung führt zu besonders hohen geometrischen Freiheitsgraden, so dass das elastische Verhalten des Puffers 8 über die Werkstoffeigenschaften hinaus in besonderer Weise durch die Gestalt der Noppen angepasst werden kann.

Die axiale Erstreckung des Puffers 8 ist, insbesondere auch bei der noppenartigen Ausbildung nach Figur 5, erheblich geringer als bei den im Stand der Technik verwendeten, gesonderten metallischen Federelementen. Während eine übliche metallische Feder beim Einsatz in Hausgeräten üblicherweise eine Höhe von etwa 8 mm aufweist, kann die axiale Erstreckung des Puffers 8 ohne Funktionsbeeinträchtigung auf beispielsweise 1 mm reduziert werden.

## Patentansprüche

1. Wälzlager (1) mit einem Außenring (2) und einem koaxial zum Außenring angeordneten Innenring (3), welche zueinander durch Wälzkörper (6) beabstandet sind, das Wälzlager (1) an seinen Außenflächen mit mindestens einem elastischen Kompensationselement in Form eines elastischen Puffers (8) ausgestattet ist, **dadurch gekennzeichnet, dass** mindestens eine Stirnfläche des Wälzlagers (1) mit dem elastischen Puffer versehen ist, und der Puffer (8) sich einerseits über eine die Wälzkörper (6) stirnseitig überdeckende Deck- oder Dichtscheibe (7) sowie andererseits kragenartig in Verlängerung des Außenrings (2) erstreckt, wobei der elastische Puffer (8) ausschließlich an der mindestens einen Stirnfläche des Wälzlagers angeordnet ist.

2. Wälzlager nach Anspruch 1, **dadurch gekennzeichnet, dass** der elastische Puffer (8) ringförmig ausgebildet ist.

3. Wälzlager nach Anspruch 1, **dadurch gekennzeichnet, dass** der Puffer (8) noppenartig ausgebildet ist.

4. Wälzlager nach Anspruch 1 bis 3, **dadurch gekennzeichnet, dass** der Puffer (8) mit der die Wälzkörper (6) stirnseitig überdeckenden Deck- oder Dichtscheibe (7) stoff- und/oder formschlüssig verbunden ist.

5. Wälzlager nach Anspruch 4, **dadurch gekennzeichnet, dass** der Puffer (8) durch Spritzgießen eines elastischen Werkstoffs an die Deck- oder Dichtscheibe (7) angeformt ist.

6. Wälzlager nach Anspruch 1 bis 3, **dadurch gekennzeichnet, dass** der Puffer (8) einstückig an der die Wälzkörper (6) stirnseitig überdeckenden Deck- oder Dichtscheibe (7) angeformt ist.

7. Wälzlager nach einem der vorhergehenden Ansprüche, **dadurch gekennzeichnet, dass** die äußere Mantelfläche (10) des Außenrings (2) und/oder die innere Mantelfläche des Innenrings (3) mit mindestens einem Kompensationselement in Form radial spannbarer Federelemente (12, 12') ausgestattet sind.

8. Wälzlager nach Anspruch 7, **dadurch gekennzeichnet, dass** die Federelemente (12, 12') aus einem elastomeren Werkstoff gefertigt sind.

9. Wälzlager nach Anspruch 8, **dadurch gekennzeichnet, dass** die Federelemente (12, 12') ringförmig ausgebildet und koaxial zum Außenring (2) bzw. Innenring (3) ausgerichtet sind.

10. Wälzlager nach Anspruch 9, **dadurch gekennzeichnet, dass** die Federelemente (12, 12') in umlaufende Radialnuten (11, 11') im Außenring (2) bzw. Innenring (3) eingefügt, insbesondere eingespritzt, sind.

11. Wälzlager nach Anspruch 10, **dadurch gekennzeichnet, dass** die Federelemente (12, 12') über 50% bis 90%, insbesondere etwa 75% ihrer radialen Erstreckung in die Radialnuten (11, 11') eingelassen sind.

12. Maschine mit einem Wälzlager (1) nach einem der vorhergehenden Ansprüche, **dadurch gekennzeichnet, dass** das Wälzlager (1) über an seinen Außenflächen vorgesehene Kompensationselemente am Gehäuse (14) der Maschine abstützbar ist.

13. Maschine nach Anspruch 12, **dadurch gekennzeichnet, dass** der Außenring (2) des Wälzlagers (1) gegen das Gehäuse (14) an mindestens einer Stirnfläche über wenigstens einen elastischen Puffer (8) abstützbar ist.

14. Maschine nach Anspruch 12 oder 13, **dadurch gekennzeichnet, dass** der Außenring (2) gegen das Gehäuse (14) über mindestens ein radial spannbares Federelement (12, 12') abstützbar ist.

15. Maschine nach einem der Ansprüche 12 bis 14, **dadurch gekennzeichnet, dass** die Maschine ein elektrisches Hausgerät ist.

## Claims

1. Roller bearing (1) having an outer ring (2) and an inner ring (3) arranged coaxially relative to the outer ring, which are arranged at a distance from each other by means of roller elements (6), the roller bearing (1) being fitted on its outer surfaces with at least one elastic compensation element in the form of an elastic buffer (8), **characterised in that** at least one end face of the roller bearing (1) is provided with the elastic buffer and the buffer (8) extends on the one hand over a covering or sealing shim (7) overlapping with the roller elements (6) on the end face and also extends on the other hand in the manner of a collar as an extension of the outer ring (2), wherein the elastic buffer (8) is arranged exclusively on the at least one end face of the roller bearing.

2. Roller bearing according to claim 1, **characterised in that** the elastic buffer (8) is embodied to be annular.

3. Roller bearing according to claim 1, **characterised in that** the buffer (8) is embodied in a knob-like manner.

4. Roller bearing according to claim 1 to 3, **characterised in that** the buffer (8) is connected integrally and/or in a form-fit manner to the covering or sealing shim (7) overlapping with the roller elements (6) on the end face.

5. Roller bearing according to claim 4, **characterised in that** the buffer (8) is moulded onto the covering or sealing shim (7) by injection-moulding an elastic material.

6. Roller bearing according to claim 1 to 3, **characterised in that** the buffer (8) is moulded in a single piece onto the covering or sealing shim (7) overlapping with the roller elements (6) on the end face.

7. Roller bearing according to one of the preceding claims, **characterised in that** the outer lateral surface (10) of the outer ring (2) and/or the inner lateral surface of the inner ring (3) are fitted with at least one compensation element in the form of radially tensible spring elements (12, 12').

8. Roller bearing according to claim 7, **characterised in that** the spring elements (12, 12') are made of an elastomer material.

9. Roller bearing according to claim 8, **characterised in that** the spring elements (12, 12') are embodied to be annular and oriented coaxially relative to the outer ring (2) or inner ring (3).

10. Roller bearing according to claim 9, **characterised in that** the spring elements (12, 12') are introduced, in particular injected, into circumferential radial grooves (11, 11') in the outer ring (2) or inner ring (3).

11. Roller bearing according to claim 10, **characterised in that** the spring elements (12, 12') are recessed into the radial grooves (11, 11') by 50% to 90%, in particular by approximately 75%, of their radial extension.

12. Machine having a roller bearing (1) according to one of the preceding claims, **characterised in that** the roller bearing (1) can be braced, by means of compensation elements provided on its outer surfaces, on the housing (14) of the machine.

13. Machine according to claim 12, **characterised in that** the outer ring (2) of the roller bearing (1) can be braced, by means of at least one elastic buffer (8), against the housing (14) on least one end face.

14. Machine according to claim 12 or 13, **characterised in that** the outer ring (2) can be braced, by means of at least one radially tensible spring element (12, 12'), against the housing (14).

15. Machine according to one of claims 12 to 14, **characterised in that** the machine is an electrical domestic appliance.

## Revendications

1. Palier à roulement (1) comprenant une bague extérieure (2) et une bague intérieure (3) disposée coaxialement à la bague extérieure, lesquelles sont distancées l'une de l'autre par des corps de roulement (6), le palier à roulement (1) étant équipé sur ses surfaces extérieures d'au moins un élément de compensation élastique en forme d'un tampon élastique (8), **caractérisé en ce qu'**au moins une surface frontale du palier à roulement (1) est munie du tampon élastique, et en **en ce que** le tampon (8) s'étend, d'une part, sur une bague de recouvrement ou bague d'étanchéité (7) recouvrant les corps de roulement (6) du côté frontal ainsi que, d'autre part, à la manière d'un col en prolongement de la bague extérieure (2), le tampon élastique (8) étant disposé exclusivement sur l'au moins une surface frontale du palier à roulement.

2. Palier à roulement selon la revendication 1, **caractérisé en ce que** le tampon élastique (8) est réalisé de manière annulaire.

3. Palier à roulement selon la revendication 1, **caractérisé en ce que** le tampon élastique (8) est réalisé en forme de noppe.

4. Palier à roulement selon les revendications 1 à 3, **caractérisé en ce que** le tampon (8) est relié par adhérence de matière et/ou de forme à la bague de recouvrement ou bague d'étanchéité (7) recouvrant les corps de roulement (6) du côté frontal.

5. Palier à roulement selon la revendication 4, **caractérisé en ce que** le tampon (8) est formé sur la bague de recouvrement ou bague d'étanchéité (7) par moulage par injection d'un matériau élastique.

6. Palier à roulement selon les revendications1 à 3, **caractérisé en ce que** le tampon (8) est formé d'une seule pièce sur la bague de recouvrement ou bague d'étanchéité (7) recouvrant les corps de roulement (6) du côté frontal.

7. Palier à roulement selon l'une quelconque des revendications précédentes, **caractérisé en ce que** la surface d'enveloppe extérieure (10) de la bague extérieure (2) et/ou la surface d'enveloppe intérieure de la bague intérieure (3) sont équipées d'au moins un élément de compensation en forme d'éléments à ressort (12, 12') pouvant être radialement contraints.

8. Palier à roulement selon la revendication 7, **caractérisé en ce que** les éléments à ressort (12, 12') sont fabriqués dans un matériau élastomère.

9. Palier à roulement selon la revendication 8, **caractérisé en ce que** les éléments à ressort (12, 12') sont réalisés de manière annulaire et sont orientés coaxialement à la bague extérieure (2) resp. à la bague intérieure (3).

10. Palier à roulement selon la revendication 9, **caractérisé en ce que** les éléments à ressort (12, 12') sont insérés, notamment injectés, dans la bague extérieure (2) resp. dans la bague intérieure (3) dans des rainures radiales périphériques (11, 11').

11. Palier à roulement selon la revendication 10, **caractérisé en ce que** les éléments à ressort (12, 12') sont insérés dans les rainures radiales (11, 11') sur 50% à 90%, notamment sur environ 75% de leur étendue radiale.

12. Machine comprenant un palier à roulement (1) selon l'une quelconque des revendications précédentes, **caractérisée en ce que** le palier à roulement (1) peut être soutenu sur le boîtier (14) de la machine par l'intermédiaire d'éléments de compensation ménagés sur ses surfaces extérieures.

13. Machine selon la revendication 12, **caractérisée en ce que** la bague extérieure (2) du palier à roulement (1) peut être soutenue contre le boîtier (14) sur au moins une surface frontale par l'Intermédiaire d'au moins un tampon élastique (8).

14. Machine selon la revendication 12 ou 13, **caractérisée en ce que** la bague extérieure (2) peut être soutenue contre le boîtier (14) par l'intermédiaire d'au moins un élément à ressort (12, 12') pouvant être radialement contraint.

15. Machine selon l'une quelconque des revendications 12 à 14, **caractérisée en ce que** la machine est un appareil ménager électrique.
